# EUROPEAN PATENT SPECIFICATION

(11) **EP 1 587 890 B1**
(45) Date of publication and mention of the grant of the patent: **28.02.2007**
(21) Application number: 04705096.8
(22) Date of filing: 26.01.2004
(51) Int. Cl.: C09G 3/00, A63C 11/08

(54) **GRIP WAX OF SKIS, A METHOD FOR WAXING SKIS AND A PRODUCT FOR WAXING SKIS**
STEIGWACHS FÜR SKIER, VERFAHREN ZUM WACHSEN VON SKIERN SOWIE PRODUKT ZUM WACHSEN VON SKIERN
FART, PROCEDE POUR FARTER DES SKIS ET PRODUIT POUR FARTER DES SKIS

(30) Priority: 24.01.2003 FI 20030114
(43) Date of publication of application: 26.10.2005
(73) Proprietor: Startex Oy, 15860 Hollola (FI)
(72) Inventor: JÄRVINEN, Jukka, c/o Startex Oy, FIN-15860 Hollola (FI)
(74) Representative: Helino, Timo Kalervo
(86) International application number: PCT/FI2004/000036
(87) International publication number: WO 2004/065506

(56) References cited:
- WO-A1-80/01355
- DD-A1- 243 507
- DD-A3- 233 907
- US-A- 4 343 863
- DATABASE WPI Week 198640, Derwent Publications Ltd., London, GB; Class A17, AN 1986-263905, XP002981828 & SU 1 213 054 A (PORTNOV A B) 23 February 1986
- DATABASE CAPLUS [Online] SEK K. ET AL: 'Wax for cross-country skis', XP002981829 Retrieved from STN Database accession no. 1990-38311 & PL 143 674 B1
- DATABASE WPI Week 198531, Derwent Publications Ltd., London, GB; Class C09, AN 1985-186058, XP002992530 & JP 60 112 871 A (MATSUMARU H) 19 June 1985
- DREUX JACQUES ET AL.: 'Examen des constituants et des proprietes des farts de ski de fond' CHIMIA vol. 34, no. 11, November 1980, pages 463 - 469, XP002981831

## Description

The invention relates to a grip wax of skis, a method for applying grip wax to skis as well as a product for applying grip wax to skis.

Conventionally, grip waxes of skis must be carefully selected according to prevailing temperatures; pastes for damp conditions and harder and more durable waxes for cold temperatures. In case the temperature is too high compared to the grip wax to be used, there will not be enough grip. In case the temperature is, in turn, too low, the grip wax will ice and will not provide glide. Due to this, under the present varying weather conditions the waxing is constant changing and experimentation of new waxes.

In addition, the new waxes require relatively much work, rubbing, application, smoothing, pasting, removal of waxes, etc. Cloths, gloves and hands often get sticky. In addition, the car, ski box or some other means of transportation often are fouled by skis that have been waxed already at home.

Another problem with the present waxes is their weak wear resistance. If you are on a ski trail a little longer, you must have grip waxes and preferably many sorts of them as the temperature may change even very fast, particularly when skiing in mountain conditions.

There has been an attempt to try to eliminate part of these problems by a means in accordance with publication WO 80/01355 in which the grip wax is applied to the ski bases as an adhesive strip. The publication discloses, however, just the idea and not an implementable solution because substantial in the waxes is their composition enabling the elimination of the aforementioned problems.

The objective of the invention is to eliminate the drawbacks referred to above. One specific objective of the invention is to disclose a new type of grip wax of skis, a new method for applying the grip wax as well as a new product for applying grip wax to the skis, these being easy, fast and simple to use, and furthermore applicable to a wide temperature range.

As for the features characteristic of the invention, reference is made to them in the claims.

The grip wax of skis in accordance with the invention comprises a high-molecular-weight polyisobutylene base, rosin alcohol or various modifications thereof as grip material and wax as glide material. According to the invention, there is more than 50% of high-molecular-weight base in the grip wax.

In one embodiment of the invention, the grip wax comprises more than 55, e.g. approximately 60% high-molecular-weight polyisobutylene base. It is even possible that there is 70-90% of that. Previously, polyisobutylene has been only used in small amounts in ski waxes as its importance has not been acknowledged, and above all as it has not been possible to apply it evenly and efficiently to the ski bases. The dominant portion of the polyisobutylene guarantees that the grip wax maintains a certain elasticity and, in addition to that, grip and durability when skiing in a wide temperature range. By scrubbing it directly to the ski bases it does not adhere sufficiently, and its melting requires a temperature so high that the ski bases would be damaged when applying the wax when molten. Now with the invention one has found optimal mixture ratios, considering both the glide and grip properties while at the same time inventing a method and means that enable the application of the wax.

In one embodiment of the invention, one uses in the high-molecular-weight polyisobutylene base an addition of a toughening binding agent, of which there is less than 6%, preferably less than 3%, in the base. As the binding agent it is possible to use e.g. LD polyethylene. The binding agent makes even a thin wax film a tough and compact one, whereby the film-like wax remains solid both when applying to the ski bases and when in use.

Resin is used in the grip wax as grip material, and there is 5-40, preferably 10-30, e.g. 15-25% of resin in the wax. A suitable rosin alcohol or various modifications thereof, such as e.g. hydroabiethyl alcohol, are used as resin.

Wax is used in the grip wax as glide material, and there is 5-40, preferably 10-30, e.g. 15-25% of wax in the wax. As the wax it is possible to use paraffin, but particularly advantageously as the wax, beeswax is used. A suitable amount of wax guarantees that the grip wax maintains its glide properties.

In one embodiment of the invention, 2-5% pit tar is used in the grip wax. It has been found to prevent the wax from icing. Furthermore, it provides the wax with colour and pleasant odour.

The invention also relates to a method for applying grip wax of skis to ski bases as described above. In the method, the grip wax is melted to form a thin, uniform film onto a suitable transfer substrate. The necessary temperature depends on the composition of the wax to be used, but it is in any case more than 100, e.g. 120-150°C. As the transfer substrate it is possible to use a paper or plastic-based, e.g. a silicone treated substrate, to which the film does not adhere too much. After this, a strip of desired length and having the width or half of the width of the ski is prepared of the transfer substrate. These steps are performed industrially and advantageously in a large scale. When the skier wishes to wax his or her skis, he or she presses the strip with the wax surface facing downwards against the ski base and presses it in place in ambient temperature without external heating, e.g. just by slightly pressing with his or her palm. Finally, the transfer substrate is withdrawn from top of the wax film that stuck to the ski bases, and the waxing is completed.

Thus, substantial in the waxing method of skis in accordance with the invention is that in the actual waxing of skis, no external heating is needed, and no abrasive, smoothing or stroking working phases are needed, instead due to the correct composition, the wax film adheres well to ski bases, remaining solid and undamaged. In this manner it forms a finished and durable layer of grip wax. The necessary uses of temperature and the smooth formations of the wax film are performed industrially in a controlled manner.

Advantageously, as the ambient temperature, a suitable inside temperature in the range 15-25°C is used, whereby a good adhesion of the wax film to the ski bases is guaranteed, when as the wax film, one of the aforementioned grip waxes in accordance with the invention is used.

Furthermore, the invention relates to a product for applying grip wax to skis. The product in accordance with the invention consists of a silicone treated paper strip and a film of grip wax melted at the other end of the paper strip, the film of grip wax being one of the aforementioned grip waxes in accordance with the invention. The thickness of the film of grip wax being used can range between 0.01-1 mm.

In the product in accordance with the invention, the silicone treated paper strip and the film of grip wax on the surface thereof may be rolled-up, whereby its handling and keeping e.g. in the pocket when skiing is easy. On the other hand, the product can also be a straight strip so that the film of grip wax is disposed between two silicone treated paper strips. In that case, the lengths of the strips must be appropriate ones, whereas from a roll it is possible to cut strips of grip wax of the length each time suitable.

The grip wax, waxing method and product in accordance with the invention have considerable advantages compared to prior art. The grip wax functions in a wide temperature range without icing while at the same time maintaining its glide and grip properties. The durability of the grip wax is outstanding, i.e. a ski once treated withstands normal skiing several hundreds of kilometres. Even on such a long ski tour there is no need to re-wax the skis. The waxing is a very simple and easy procedure in which no instruments, additional heat, rubbing, applying etc. are needed. As the product adheres better in the inside temperatures, the grip wax can be applied already at home when going skiing, and the paper can be left in place, whereby the transportation e.g. in a car is tidy. When going on a ski trail, the papers are just stripped off and the skis are ready. In this way, the wax remains clean and tidy during the transportation without dirtying the car.

### Example

In the tests carried out, the grip wax was found to function very well with the following mixture ratios:
55-65% high-molecular-weight polyisobutylene
1-3% LD polyethylene
15-25% hydroabiethyl alcohol
15-25% beeswax.

As an example we mention a grip wax having about
58% high-molecular-weight polyisobutylene
2% LD polyethylene
20% hydroabiethyl alcohol
20% beeswax.

The grip wax presented above was melted and applied as a thin layer over the surface of a silicone treated paper, from which it was moved to the ski bases in room temperature.

One skied these skis more than 200 km with the temperature ranging from +4°C damp weather to - 15°C cold weather. The wear resistance of the wax is outstanding. The action of the ski wax has been outstanding in all conditions. Both grip and glide have been good and changeless during the whole test. After the test, the grip wax showed no considerable signs of abrasion.

## Claims

1. A grip wax of skis comprising a high-molecular-weight polyisobutylene base, rosin alcohol or various modifications thereof as grip material, and wax as glide material, **characterised in that** the grip wax contains more than 50% high-molecular-weight polyisobutylene base.

2. The grip wax of skis as defined in claim 1, **characterised in that** the grip wax contains more than 55, e.g. about 60% high-molecular-weight polyisobutylene base.

3. The grip wax of skis as defined in claim 1 or 2, **characterised in that** preferably the polyisobutylene base contains less than 6%, preferably less than 3% toughening binding agent.

4. The grip wax of skis as defined in claim 3, **characterised in that** as the toughening agent, LD polyethylene is used.

5. The grip wax of skis as defined in any one of claims 1-4, **characterised in that** as the rosin alcohol, hydroabiethyl alcohol is used.

6. The grip wax of skis as defined in any one of claims 1-5, **characterised in that** there is rosin alcohol 5-40, preferably 10-30, e.g. 15-25%.

7. The grip wax of skis as defined in any one of claims 1-6, **characterised in that** as the wax, paraffin is used.

8. The grip wax of skis as defined in any one of claims 1-6, **characterised in that** as the wax, beeswax is used.

9. The grip wax of skis as defined in any one of claims 1-8, **characterised in that** there is wax 5-40, preferably 10-30, e.g. 15-25%.

10. A method for applying grip wax of skis to ski bases by using a grip wax as defined in any one of claims 1-9, **characterised in that**
- the grip wax is melted to form a thin, uniform film onto a transfer substrate,
- a strip of desired length and having the width of the ski is prepared of the transfer substrate,
- the strip is pressed with the wax surface facing downwards against the ski base and is pressed in place in ambient temperature without external heating, and
- the transfer substrate is withdrawn from top of the wax film that stuck to the ski bases, and the waxing is completed.

11. A product for applying grip wax to skis, **characterised in that** the product consists of a silicone treated paper strip and a film of grip wax as defined in any one of claims 1-9, which is melted at the other end of the paper strip.

12. The product as defined in claim 11, **characterised in that** the thickness of the film of grip wax is 0.01-1 mm.

13. The product as defined in claim 11 or 12, **characterised in that** the paper strip and the film of grip wax on the surface thereof are rolled-up.

14. The product as defined in claim 11 or 12, **characterised in that** the product is a straight strip so that the film of grip wax is disposed between two paper strips.

## Patentansprüche

1. Steigwachs für Skier, umfassend eine Polyisobutylen-Grundlage mit hohem Molekulargewicht, Kolophoniumalkohol oder verschiedene Modifikationen desselben als Steigmaterial und Wachs als Gleitmaterial, **dadurch gekennzeichnet, dass** das Steigwachs mehr als 50 % Polyisobutylen-Grundlage mit hohem Molekulargewicht enthält.

2. Steigwachs für Skier nach Anspruch 1, **dadurch gekennzeichnet, dass** das Steigwachs mehr als 55, z.B. etwa 60 % Polyisobutylen-Grundlage mit hohem Molekulargewicht enthält.

3. Steigwachs für Skier nach Anspruch 1 oder 2, **dadurch gekennzeichnet, dass** die Polyisobutylen-Grundlage vorzugsweise weniger als 6 %, vorzugsweise weniger als 3 % zäh machendes Bindemittel enthält.

4. Steigwachs für Skier nach Anspruch 3, **dadurch gekennzeichnet, dass** als zäh machendes Mittel LD-Polyethylen verwendet wird.

5. Steigwachs für Skier nach irgendeinem der Ansprüche 1 - 4, **dadurch gekennzeichnet, dass** als Kolophoniumalkohol Hydroabiethylalkohol verwendet wird.

6. Steigwachs für Skier nach irgendeinem der Ansprüche 1 - 5, **dadurch gekennzeichnet, dass** Kolophoniumalkohol zu 5 - 40, bevorzugt 10 - 30, z.B. 15 bis 25 % vorliegt.

7. Steigwachs für Skier nach irgendeinem der Ansprüche 1 - 6, **dadurch gekennzeichnet, dass** als Wachs Paraffin verwendet wird.

8. Steigwachs für Skier nach irgendeinem der Ansprüche 1 - 6, **dadurch gekennzeichnet**, das als Wachs Bienenwachs verwendet wird.

9. Steigwachs für Skier nach irgendeine der Ansprüche 1 - 8, **dadurch gekennzeichnet, dass** das Wachs zu 5 - 40, bevorzugt 10 - 30, z.B. 15 - 25 % vorliegt.

10. Verfahren zum Auftragen von Steigwachs für Skier auf Ski-Grundflächen unter Verwendung eines Steigwachses nach irgendeinem der Ansprüche 1 - 9, **dadurch gekennzeichnet, dass**
- das Steigwachs geschmolzen wird, um einen dünnen, gleichförmigen Film auf einem Übertragungssubstrat zu bilden,
- ein Streifen mit gewünschter Länge und mit der Breite der Skier aus dem Übertragungssubstrat hergestellt wird,
- der Streifen mit der Wachsoberfläche nach unten gegen die Ski-Grundfläche gepresst wird und unter Umgebungstemperatur ohne äußeres Erwärmen an seine Stelle gepresst wird und
- das Übertragungssubstrat von der Oberfläche des Wachsfilms, der auf der Ski-Grundfläche haftet, abgezogen wird und das Wachsen beendet wird.

11. Produkt zum Auftragen von Steigwachs auf Skier, **dadurch gekennzeichnet, dass** das Produkt aus einem Silicon-behandelten Papierstreifen und einem Film aus Steigwachs nach irgendeinem der Ansprüche 1 - 9 besteht, welches am anderen Ende des Papierstreifens geschmolzen wird.

12. Produkt nach Anspruch 11, **dadurch gekennzeichnet, dass** die Dicke des Steigwachsfilms 0,01 - 1 mm beträgt.

13. Produkt nach Anspruch 11 oder 12, **dadurch gekennzeichnet, dass** der Papierstreifen und der Steigwachsfilm auf der Oberfläche desselben aufgerollt sind.

14. Produkt nach Anspruch 11 oder 12, **dadurch gekennzeichnet, dass** das Produkt ein gerader Streifen ist, derart, dass der Steigwachsfilm zwischen zwei Papierstreifen angeordnet ist.

## Revendications

1. Cire d'adhérence pour skis comprenant une base polyisobutylène de haut poids moléculaire, de l'alcool de colophane ou des modifications de celle-ci utilisée comme matériau d'adhérence, et une cire utilisée comme un matériau glissant, **caractérisée en ce que** la cire d'adhérence contient plus de 50 % de base polyisobutylène de haut poids moléculaire.

2. Cire d'adhérence pour skis telle que définie dans la revendication 1, **caractérisée en ce que** la cire d'adhérence contient plus de 55, par exemple environ 60 % de base polyisobutylène de haut poids moléculaire.

3. Cire d'adhérence pour skis telle que définie dans les revendications 1 ou 2, **caractérisée en ce que** de préférence la base polyisobutylène contient moins de 6 %, de préférence moins de 3 % d'agent de liaison durcisseur.

4. Cire d'adhérence pour skis telle que définie dans la revendication 3, **caractérisée en ce que** l'agent durcisseur utilisé est le polyéthylène basse densité.

5. Cire d'adhérence pour skis telle que définie dans l'une quelconque des revendications 1 à 4, **caractérisée en ce que** l'alcool de colophane utilisé est l'alcool dihydroabiétique.

6. Cire d'adhérence pour skis telle que définie dans l'une quelconque des revendications 1 à 5, **caractérisée en ce qu'**il y a 5 à 40, de préférence 10 à 30, par exemple 15 à 25 % d'alcool de colophane.

7. Cire d'adhérence pour skis telle que définie dans l'une quelconque des revendications 1 à 6, **caractérisée en ce que** la cire utilisée est une paraffine.

8. Cire d'adhérence pour skis telle que définie dans l'une quelconque des revendications 1 à 6, **caractérisée en ce que** la cire utilisée est une cire d'abeille.

9. Cire d'adhérence pour skis telle que définie dans l'une quelconque des revendications 1 à 8, **caractérisée en ce qu'**il y a 5 à 40, de préférence 10 à 30, par exemple 15 à 25 % de cire.

10. Procédé pour appliquer une cire d'adhérence pour skis sur les semelles des skis en utilisant une cire d'adhérence telle que définie dans l'une quelconque des revendications 1 à 9, **caractérisé en ce que**
la cire d'adhérence est fondue pour former un film uniforme, fin sur un substrat de transfert,
une bande de longueur désirée et ayant la largeur du ski est enduite du substrat de transfert,
la bande est pressée avec la surface cireuse tournée vers le bas contre la semelle du ski et est pressée en place à température ambiante sans chauffage externe, et
le substrat de transfert est retiré du film de cire qui colle aux semelles des skis, et le fartage est achevé.

11. Produit pour appliquer une cire d'adhérence à des skis, **caractérisé en ce que** le produit consiste en une bande de papier traitée par de la silicone et un film de cire d'adhérence telle que définie dans l'une quelconque des revendications 1 à 9, laquelle est fondue sur l'autre face de la bande de papier.

12. Produit tel que défini dans la revendication 11, **caractérisé en ce que** l'épaisseur du film de cire d'adhérence est de 0,01 à 1 mm.

13. Produit tel que défini dans la revendication 11 ou 12, **caractérisé en ce que** la bande de papier et le film de cire d'adhérence sur sa surface sont enroulés.

14. Produit tel que défini dans les revendications 11 ou 12, **caractérisé en ce que** le produit est une bande rectiligne de manière à ce que le film de cire d'adhérence soit disposé entre deux bandes de papier.
